# EUROPEAN PATENT APPLICATION

(11) **EP 2 239 636 A1**
(43) Date of publication of application: **13.10.2010**
(21) Application number: 10157259.2
(22) Date of filing: 22.03.2010
(51) Int. Cl.: G03H 1/02, G11B 7/24, B65B 7/00

(54) **Container for encapsulation of hygroscopic materials like e.g. an holographic recording material**

(30) Priority: 08.04.2009 IN CH08142009
(71) Applicant: Moser Baer India Limited, New Delhi 110020 (IN)
(72) Inventor: Kumar, Sanjay, 110020 New Delhi (IN); Nyati, Giriraj, 110020 New Delhi (IN); Dutta, Subrata, 110020 New Delhi (IN); Jindal, Rajeev, 110020 New Delhi (IN)
(74) Representative: Roche, Dermot

(57) **Abstract**

An article (102) involving encapsulation of one or more hygroscopic materials and manufacturing method and system thereof are provided. The article (102) includes a first substrate (106), a second substrate (108), one or more first structures formed at a first periphery associated with the first substrate (106), and one or more second structures formed at a second periphery associated with the second substrate (108). The first structures and the second structures are engaged together mechanically to form an enclosure (104) between the first substrate (106) and the second substrate (108). The enclosure (104) is capable of preventing exposure of a hygroscopic material encapsulated between the first substrate (106) and the second substrate (108) to the surrounding environment.

## Description

### CROSS-REFERENCE TO RELATED APPLICATION

This application claims priority from Indian Patent Application No. 814/CHE/2009 filed on April 1, 2009, titled 'Articles Involving Encapsulation of Hygroscopic Materials, which is incorporated herein in its entirety by reference.

### BACKGROUND OF THE INVENTION

The present invention relates, in general, to encapsulation techniques. More particularly, the present invention relates to articles involving encapsulation of one or more hygroscopic materials and manufacturing methods and systems thereof.

A holographic storage medium stores information within a photosensitive optical material. The photosensitive optical material is hygroscopic in nature, and gets damaged when exposed to the surrounding environment. This leads to loss of information stored on the holographic storage medium. Therefore, it is desired that such holographic storage media be protected against exposure to the surrounding environment.

With new developments in the photovoltaic industry, organic photovoltaic devices have been devised. In addition, various organic lighting devices have been devised recently. These organic photovoltaic devices and lighting devices employ hygroscopic materials. Therefore, it is desired that such organic photovoltaic devices and lighting devices be protected against exposure to the surrounding environment.

Various techniques have been employed for encapsulation of hygroscopic materials. In one such technique, a side wrap is wrapped around an outer edge of an article. The side wrap is then heat welded to seal the side wrap with the article. The side wrap may, for example, be made of a metal, a metal alloy, any non-metallic material that is capable of shielding the photosensitive optical material inside the article. In other techniques, a hermetic seal is applied on an outer edge of an article.

However, the above-mentioned techniques suffer from several disadvantages. Raw materials used in the side wrap are costly. In addition, the process is complex and time-consuming, and therefore, low-yielding. This leads to an increase in the cost of production. Moreover, the process may leave some micro-gaps in the side wrap. This makes the side wrap unreliable. Furthermore, such side wraps and seals add dead weight on articles.

In light of the foregoing discussion, there is a need for an article involving encapsulation of one or more hygroscopic materials that has a simple and reliable edge-closing structure, has a low cost, can be manufactured with higher yield in lesser time, and has a reduced dead weight, compared to conventional articles.

### SUMMARY OF THE INVENTION

An object of the present invention is to provide an article involving encapsulation of one or more hygroscopic materials (and manufacturing methods and systems thereof).

Another object of the present invention is to provide the article that has a simple and reliable edge-closing structure, compared to conventional articles.

Yet another object of the present invention is to provide the article that has a low cost, and can be manufactured with higher yield in lesser time, compared to conventional articles. In addition, the article should have a reduced dead weight, compared to conventional articles.

Embodiments of the present invention provide an article involving encapsulation of one or more hygroscopic materials. The article includes a first substrate, a second substrate, one or more first structures at a first periphery associated with the first substrate, and one or more second structures at a second periphery associated with the second substrate. The first structures and the second structures substantially complement each other, and are capable of being engaged together mechanically to form an enclosure between the first substrate and the second substrate.

In accordance with an embodiment of the present invention, the first structures include a plurality of first three-dimensional features protruding out from the first substrate along the first periphery, and the second structures include a plurality of second three-dimensional features protruding out from the second substrate along the second periphery. The first substrate is aligned with the second substrate, such that the first three-dimensional features and the second three-dimensional features are substantially engaged in an alternating manner.

In accordance with another embodiment of the present invention, the first structures include one or more first threads on a first extension at the first periphery, and the second structures include one or more second threads on a second extension at the second periphery. The first substrate is aligned with the second substrate, and rotated relative to the second substrate, such that the first threads and the second threads close together.

The first structures and the second structures are simple in form, and can be engaged together to form the enclosure in a simple manner. Therefore, the article can be manufactured with higher yield in lesser time.

The enclosure so formed is reliable, and therefore, is capable of preventing exposure of a hygroscopic material encapsulated between the first substrate and the second substrate to the surrounding environment.

Moreover, no additional material is required to be applied to form the enclosure. Therefore, the article has a reduced dead weight, and has a low cost.

### BRIEF DESCRIPTION OF THE DRAWINGS

Embodiments of the present invention will hereinafter be described in conjunction with the appended drawings provided to illustrate and not to limit the scope of the claims, wherein like designations denote like elements, and in which:
FIG. 1A illustrates a top view of an article of manufacture involving encapsulation of one or more hygroscopic materials, and FIG. 1B illustrates a sectional view of a section A-A cut through the article, in accordance with an embodiment of the present invention;
FIGs. 2A and 2B illustrate how an enclosure is formed, and FIG. 2C is an enlarged view illustrating two first three-dimensional features and a second three-dimensional feature, in accordance with an exemplary embodiment of the present invention;
FIG. 3A illustrates a top view of an article of manufacture involving encapsulation of one or more hygroscopic materials, and FIG. 3B illustrates a sectional view of a section B-B cut through the article, in accordance with another embodiment of the present invention;
FIGs. 4A and 4B are sectional views illustrating how an enclosure is formed, in accordance with another exemplary embodiment of the present invention;
FIG. 5 illustrates a system for manufacturing an article involving encapsulation of one or more hygroscopic materials, in accordance with an embodiment of the present invention;
FIG. 6 illustrates a method of manufacturing an article involving encapsulation of one or more hygroscopic materials, in accordance with an embodiment of the present invention; and
FIG. 7 illustrates a method of manufacturing a storage medium, in accordance with an embodiment of the present invention.

The same reference numerals refer to the same parts throughout the various figures.

### DETAILED DESCRIPTION

As used in the specification and claims, the singular forms "a", "an" and "the" include plural references unless the context clearly dictates otherwise. For example, the term "an article" may include a plurality of articles unless the context clearly dictates otherwise.

Embodiments of the present invention provide an article of manufacture involving encapsulation of one or more hygroscopic materials, and a method and system for manufacturing the article. In the description of the embodiments of the present invention, numerous specific details are provided, such as examples of components and/or mechanisms, to provide a thorough understanding of embodiments of the present invention. One skilled in the relevant art will recognize, however, that an embodiment of the present invention can be practiced without one or more of the specific details, or with other apparatus, systems, assemblies, methods, components, materials, parts, and/or the like. In other instances, well-known structures, materials, or operations are not specifically shown or described in detail to avoid obscuring aspects of embodiments of the present invention.

### GLOSSARY

First substrate and second substrate: A first substrate and a second substrate encapsulate a hygroscopic material in-between.

First periphery and second periphery: A periphery of a region includes a boundary of that region. In certain embodiments of the present invention, the periphery may also include a narrow area in proximity to the boundary of the region. A first periphery is associated with the first substrate, while a second periphery is associated with the second substrate.

First structure, second structure and enclosure: One or more first structures and one or more second structures are formed at the first periphery and the second periphery, respectively. The first structures and the second structures substantially complement each other. The first structures and the second structures are engaged together mechanically to form an enclosure between the first substrate and the second substrate.

Three-dimensional features: Three-dimensional features are a sequence of individual three-dimensional features arranged one after another. These three-dimensional features protrude out from a substrate. The three-dimensional features may be of any desired shape. For example, the three-dimensional features may be polygonal or curved in shape.

Threads: A thread is a three-dimensional spiral rib that is formed on an extension at a periphery.

First molding unit: A first molding unit molds a first substrate with one or more first structures. The first molding unit may, for example, be an injection molding machine.

First three-dimensional mold: A first three-dimensional mold is designed to form a plurality of first three-dimensional features on the first substrate. The first three-dimensional mold may, for example, include a stamper with a negative impression of the first three-dimensional features to be formed.

First thread mold: A first thread mold is designed to form one or more first threads on the first substrate. The first thread mold may, for example, include a stamper with a negative impression of the first threads to be formed.

Second molding unit: A second molding unit molds a second substrate with one or more second structures. The second molding unit may, for example, be an injection molding machine.

Second three-dimensional mold: A second three-dimensional mold is designed to form a plurality of second three-dimensional features on the second substrate. The second three-dimensional mold may, for example, include a stamper with a negative impression of the second three-dimensional features to be formed.

Second thread mold: A second thread mold is designed to form one or more second threads on the second substrate. The second thread mold may, for example, include a stamper with a negative impression of the second threads to be formed.

Engaging unit: An engaging unit engages the first structures and the second structures together mechanically to form an enclosure.

Aligning unit: An aligning unit aligns the first substrate and the second substrate. For example, the aligning unit may pick the first substrate and align the first substrate with the second su bstrate.

Rotating unit: A rotating unit rotates the first substrate and the second substrate relative to each other.

Photovoltaic cell: A photovoltaic cell is a packaged assembly of photovoltaic elements, which converts solar energy into electricity by the photovoltaic effect.

Lighting device: A lighting device is a packaged assembly of light-emitting elements, which is often used for display.

The article includes a first substrate, a second substrate, one or more first structures at a first periphery, and one or more second structures at a second periphery. The first periphery is associated with the first substrate, while the second periphery is associated with the second substrate. The first structures and the second structures substantially complement each other, and are capable of being engaged together mechanically to form an enclosure between the first substrate and the second substrate.

In accordance with an embodiment of the present invention, the first structures include a plurality of first three-dimensional features protruding out from the first substrate along the first periphery in a sequence, and the second structures include a plurality of second three-dimensional features protruding out from the second substrate along the second periphery in a sequence. In order to form the enclosure, the first substrate is aligned with the second substrate, such that the first three-dimensional features and the second three-dimensional features are substantially engaged in an alternating manner.

The first three-dimensional features have a shape that is substantially complementary to the shape of the second three-dimensional features. The first three-dimensional features and the second three-dimensional features may, for example, have a polygonal shape, such as a rectangular shape, a trapezoidal shape and a triangular shape. The first three-dimensional features and the second three-dimensional features may also have a curved shape, such as a U shape and a bell shape.

In accordance with another embodiment of the present invention, the first structures include one or more first threads on a first extension at the first periphery, and the second structures include one or more second threads on a second extension at the second periphery. The first threads and the second threads substantially complement each other. The first substrate is aligned with the second substrate, and rotated relative to the second substrate, such that the first threads and the second threads close together. The first substrate may, for example, be rotated at an angle of rotation ranging between 10 degrees and 360 degrees, to form the enclosure.

The enclosure so formed is capable of preventing exposure of a hygroscopic material encapsulated between the first substrate and the second substrate to the surrounding environment. This makes the article suitable for various applications. In one embodiment of the present invention, the article may be suitably used in a holographic storage medium, wherein a storage material, including a hygroscopic material, is dispensed between the first substrate and the second substrate. In another embodiment of the present invention, the article may be suitably used in an organic photovoltaic cell, wherein one or more photovoltaic elements, including a hygroscopic material, are placed between the first substrate and the second substrate. In yet another embodiment of the present invention, the article may be suitably used in an organic lighting device, wherein one or more light-emitting elements, including a hygroscopic material, are placed between the first substrate and the second substrate.

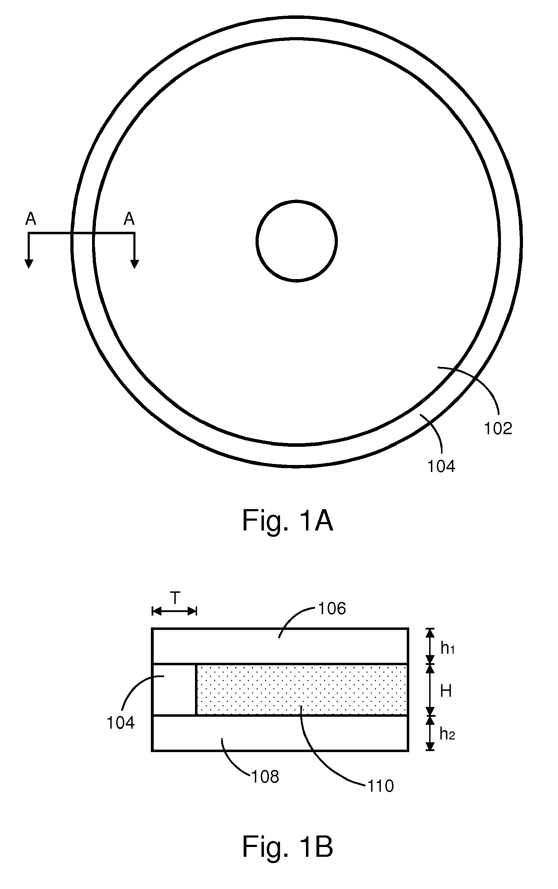

FIG. 1A illustrates a top view of an article of manufacture 102 involving encapsulation of one or more hygroscopic materials, in accordance with an embodiment of the present invention. Article 102 has an enclosure 104 formed at its periphery.

FIG. 1B illustrates a sectional view of a section A-A cut through article 102, in accordance with an embodiment of the present invention. Article 102 includes a first substrate 106, a second substrate 108, one or more first structures (not shown in FIGs. 1A and 1B) formed at a first periphery associated with first substrate 106, and one or more second structures (not shown in FIGs. 1A and 1B) formed at a second periphery associated with second substrate 108. The first structures and the second structures substantially complement each other. The first structures and the second structures are capable of being engaged together mechanically to form enclosure 104 between first substrate 106 and second substrate 108.

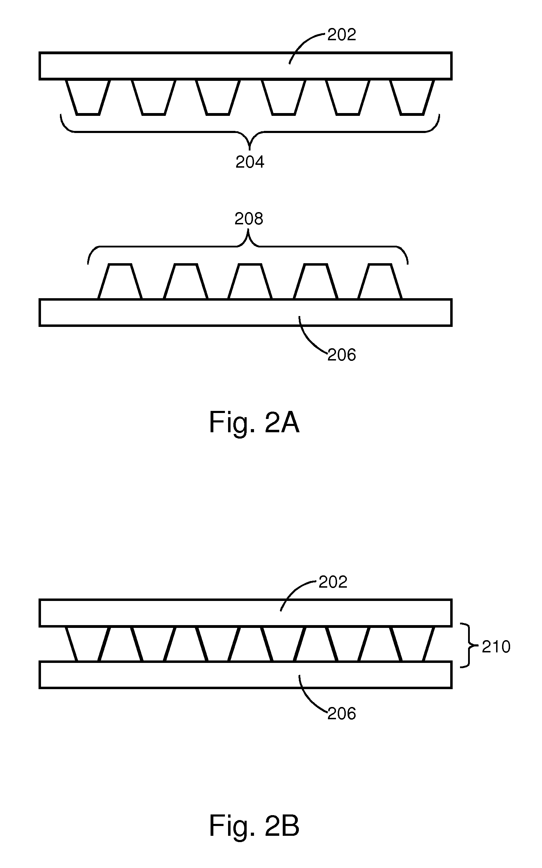

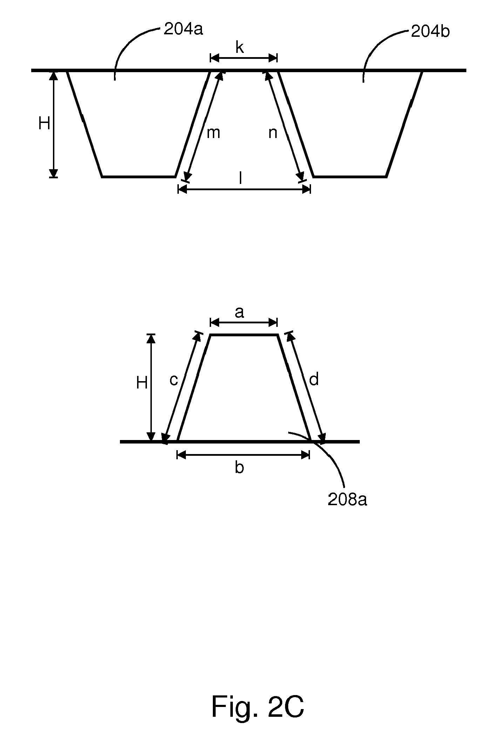

In accordance with an embodiment of the present invention, the first structures include a plurality of first three-dimensional features protruding out from first substrate 106 along the first periphery in a sequence, and the second structures include a plurality of second three-dimensional features protruding out from second substrate 108 along the second periphery in a sequence. The first three-dimensional features have a shape that is substantially complementary to the shape of the second three-dimensional features. In order to form enclosure 104, first substrate 106 is aligned with second substrate 108, such that the first three-dimensional features and the second three-dimensional features are substantially engaged in an alternating manner. Details of such three-dimensional features have been provided in conjunction with FIGs. 2A, 2B and 2C.

With reference to FIG. 1B, first substrate 106 has a height 'h1' and second substrate 108 has a height 'h2'. The values of 'h1' and 'h2' may, for example, range between 0.5 mm and 1.5 mm. Enclosure 104 has a thickness 'T' and a height 'H'. The value of 'T' may, for example, range between 0.5 mm and 2 mm, while the value of 'H' may, for example, range between 0.5 mm and 2 mm.

A three-dimensional space 110 of height 'H' is formed between first substrate 106 and second substrate 108. A hygroscopic material is filled in three-dimensional space 110. While the hygroscopic material is encapsulated between first substrate 106 and second substrate 108, enclosure 104 prevents exposure of the hygroscopic material to the surrounding environment.

With reference to FIG. 1A, article 102 is circular in shape. Accordingly, first substrate 106 and second substrate 108 are circular in shape. It should be noted here that article 102 is not limited to a specific shape or size of its components. FIGs. 1A and 1B are merely an example, which should not unduly limit the scope of the claims herein. One of ordinary skill in the art would recognize many variations, alternatives, and modifications of embodiments of the present invention.

FIGs. 2A and 2B illustrate how an enclosure is formed, in accordance with an exemplary embodiment of the present invention. A first substrate 202 includes a plurality of first three-dimensional features 204 protruding out along a first periphery. A second substrate 206 includes a plurality of second three-dimensional features 208 protruding out along a second periphery.

First three-dimensional features 204 are arranged in a sequence one after another, as shown in FIG. 2A. Similarly, second three-dimensional features 208 are arranged in a sequence one after another. With reference to FIG. 2A, first three-dimensional features 204 and second three-dimensional features 208 are trapezoidal in shape. It should be noted here that first three-dimensional features 204 and second three-dimensional features 208 may be in the form of one or more rows of trapezoidal three-dimensional features.

First three-dimensional features 204 are formed in a manner that a gap between two adjacent first three-dimensional features 204 substantially complements a second three-dimensional feature 208. Therefore, first three-dimensional features 204 and second three-dimensional features 208 substantially engage in an alternating manner, to form a substantially closed enclosure 210, as shown in FIG. 2B.

FIG. 2C is an enlarged view illustrating two first three-dimensional features 204a and 204b, and a second three-dimensional feature 208a, in accordance with a first exemplary embodiment of the present invention. With reference to FIG. 2C, first three-dimensional feature 204a, first three-dimensional feature 204b and second three-dimensional feature 208a have the same height 'H'. Two parallel sides of second three-dimensional feature 208a have lengths 'a' and 'b', while two inclined sides of second three-dimensional feature 208a have lengths 'c' and 'd'. First three-dimensional features 204a and 204b are formed in a manner that a gap between first three-dimensional features 204a and 204b substantially complements second three-dimensional feature 208a. Accordingly, the value of 'k' is substantially equal to the value of 'a', the value of 'I' is substantially equal to the value of 'b', the value of 'm' is substantially equal to the value of 'c', and the value of 'n' is substantially equal to the value of 'd'. Therefore, when first three-dimensional features 204 are mechanically engaged with second three-dimensional features 208, a substantially closed enclosure is formed. This holds true for other three-dimensional features as well, regardless of their shapes.

It should be noted that a three-dimensional feature may have any desired dimensions. Continuing from the above example, the value of 'a' may be greater or lesser than, or equal to the value of 'b'.

FIGs. 2A, 2B and 2C are merely examples, which should not unduly limit the scope of the claims herein. One of ordinary skill in the art would recognize many variations, alternatives, and modifications of embodiments of the present invention.

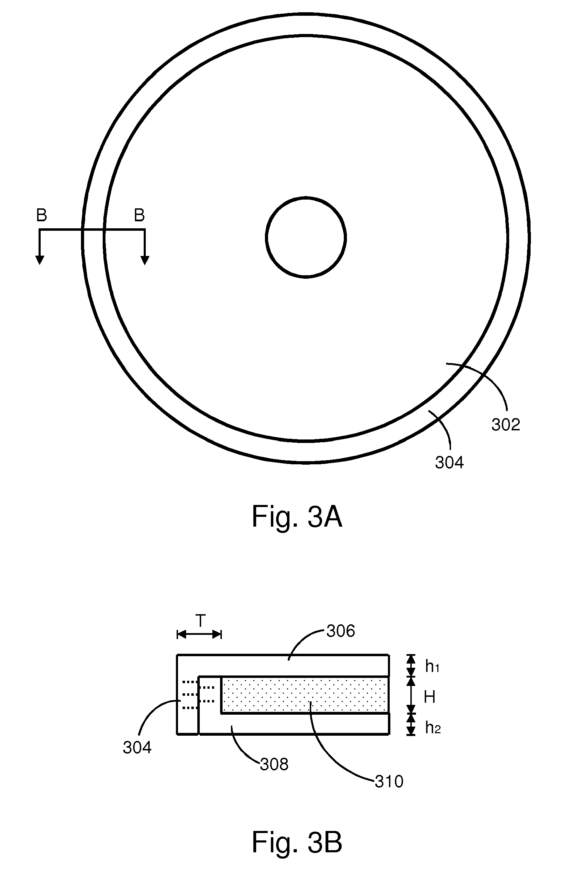

FIG. 3A illustrates a top view of an article of manufacture 302 involving encapsulation of one or more hygroscopic materials, in accordance with another embodiment of the present invention. Article 302 has an enclosure 304 formed at its periphery.

FIG. 3B illustrates a sectional view of a section B-B cut through article 302, in accordance with another embodiment of the present invention. Article 302 includes a first substrate 306, a second substrate 308, one or more first structures (not shown in FIGs. 3A and 3B) formed at a first periphery associated with first substrate 306, and one or more second structures (not shown in FIGs. 3A and 3B) formed at a second periphery associated with second substrate 308. The first structures and the second structures substantially complement each other. The first structures and the second structures are capable of being engaged together mechanically to form enclosure 304 between first substrate 306 and second substrate 308.

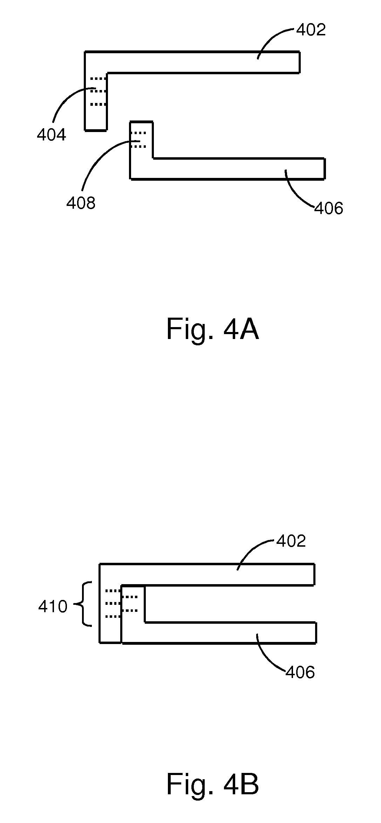

In accordance with another embodiment of the present invention, the first structures include one or more first threads on a first extension at the first periphery, and the second structures include one or more second threads on a second extension at the second periphery. First substrate 306 is aligned with second substrate 308, and rotated relative to second substrate 308, such that the first threads and the second threads close together. For example, first substrate 306 and second substrate 308 may be rotated relative to each other at an angle of rotation ranging between 10 degrees and 360 degrees, to form enclosure 304. Details of such threads have been provided in conjunction with FIGs. 4A and 4B.

With reference to FIG. 3B, first substrate 306 has a height 'h1' and second substrate 308 has a height 'h2'. The values of 'h1' and 'h2' may, for example, range between 0.5 mm and 1.5 mm. Enclosure 304 has a thickness 'T' and a height 'H'. The value of 'T' may, for example, range between 0.5 mm and 2 mm, while the value of 'H' may, for example, range between 0.5 mm and 2 mm.

A three-dimensional space 310 of height 'H' is formed between first substrate 306 and second substrate 308. A hygroscopic material is filled in three-dimensional space 310. While the hygroscopic material is encapsulated between first substrate 306 and second substrate 308, enclosure 304 prevents exposure of the hygroscopic material to the surrounding environment.

With reference to FIG. 3A, article 302 is circular in shape. Accordingly, first substrate 306 and second substrate 308 are circular in shape. It should be noted here that article 302 is not limited to a specific shape or size of its components. FIGs. 3A and 3B are merely an example, which should not unduly limit the scope of the claims herein. One of ordinary skill in the art would recognize many variations, alternatives, and modifications of embodiments of the present invention.

FIGs. 4A and 4B are sectional views illustrating how an enclosure is formed, in accordance with another exemplary embodiment of the present invention. A first substrate 402 includes one or more first threads 404 on a first extension at a first periphery, while a second substrate 406 includes one or more second threads 408 on a second extension at a second periphery. With reference to FIG. 4A, first threads 404 are formed on an inner side of an L-shaped extension on first substrate 402, and second threads 408 are formed on an outer side of an L-shaped extension on second substrate 406.

First substrate 402 is aligned with second substrate 406. First substrate 402 is then rotated relative to second substrate 406, such that first threads 404 and second threads 408 close together to form an enclosure 410, as shown in FIG. 4B.

FIGs. 4A and 4B are merely an example, which should not unduly limit the scope of the claims herein. One of ordinary skill in the art would recognize many variations, alternatives, and modifications of embodiments of the present invention. For example, the arrangement of first substrate 402 and second substrate 406 may be interchanged, that is, second substrate 406 may be arranged over first substrate 402. In other words, the design of first substrate 402 and second substrate 406 may be interchanged, that is, first threads 404 may be formed on an outer side of the L-shaped extension on first substrate 402, and second threads 408 may be formed on an inner side of the L-shaped extension on second substrate 406.

Article 102 and article 302 are suitable for use in various applications, where hygroscopic materials are used. Examples of such applications include, but are not limited to, holographic storage media, organic photovoltaic cells, and organic lighting devices.

An embodiment of the present invention provides a storage medium. The storage medium includes a first substrate, a second substrate, one or more first structures at a first periphery, and one or more second structures at a second periphery. The first periphery is associated with the first substrate, while the second periphery is associated with the second substrate. The first structures have a shape that is substantially complementary to the shape of the second structures. The first structures and the second structures are capable of being engaged together mechanically to form an enclosure between the first substrate and the second substrate.

A storage material is dispensed between the first substrate and the second substrate. The storage material includes a hygroscopic material. For example, the storage material may be an active material in a fluid state. The active material cures itself and bonds the first substrate and the second substrate together. The enclosure, formed by the first structures and the second structures, prevents exposure of the storage material to the surrounding environment.

The storage medium may be manufactured in any desired shape and size. For example, the storage medium may be made in circular, rectangular or square shapes. In case of a circular storage medium, the storage medium may be made with a diameter ranging between 60 mm and 130 mm.

Another embodiment of the present invention provides a photovoltaic cell. The photovoltaic cell includes a first substrate, a second substrate, one or more first structures at a first periphery, and one or more second structures at a second periphery. The first periphery is associated with the first substrate, while the second periphery is associated with the second substrate. The first structures have a shape that is substantially complementary to the shape of the second structures. The first structures and the second structures are capable of being engaged together mechanically to form an enclosure between the first substrate and the second substrate.

The photovoltaic cell includes one or more photovoltaic elements placed between the first substrate and the second substrate. The photovoltaic elements include a hygroscopic material. The photovoltaic elements may be of any desired shape and size. For example, the photovoltaic elements may be rectangular in shape, and placed substantially parallel to each other. Alternatively, a single photovoltaic element in the form of a sheet may be placed between the first substrate and the second substrate.

The enclosure, formed by the first structures and the second structures, prevents exposure of the hygroscopic material to the surrounding environment.

Yet another embodiment of the present invention provides a lighting device. The lighting device includes a first substrate, a second substrate, one or more first structures at a first periphery, and one or more second structures at a second periphery. The first periphery is associated with the first substrate, while the second periphery is associated with the second substrate. The first structures have a shape that is substantially complementary to the shape of the second structures. The first structures and the second structures are capable of being engaged together mechanically to form an enclosure between the first substrate and the second substrate.

The lighting device includes one or more light-emitting elements placed between the first substrate and the second substrate. The light-emitting elements include a hygroscopic material. The enclosure, formed by the first structures and the second structures, prevents exposure of the hygroscopic material to the surrounding environment.

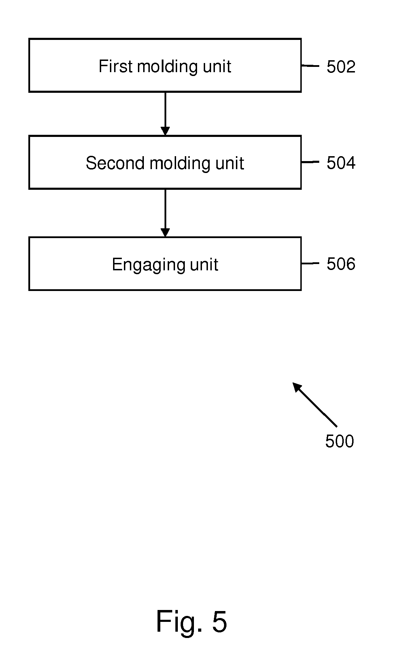

FIG. 5 illustrates a system 500 for manufacturing an article involving encapsulation of one or more hygroscopic materials, in accordance with an embodiment of the present invention. System 500 includes a first molding unit 502, a second molding unit 504 and an engaging unit 506.

First molding unit 502 is adapted to mold a first substrate, and form one or more first structures at a first periphery associated with the first substrate.

Second molding unit 504 is adapted to mold a second substrate, and form one or more second structures at a second periphery associated with the second substrate.

Engaging unit 506 is adapted to engage the first structures and the second structures together mechanically to form an enclosure between the first substrate and the second substrate. As mentioned above, the enclosure so formed is capable of preventing exposure of a hygroscopic material encapsulated between the first substrate and the second substrate to the surrounding environment.

In accordance with an embodiment of the present invention, first molding unit 502 includes a first three-dimensional mold adapted to form a plurality of first three-dimensional features protruding out from the first substrate along the first periphery in a sequence, and second molding unit 504 includes a second three-dimensional mold adapted to form a plurality of second three-dimensional features protruding out from the second substrate along the second periphery in a sequence. The first three-dimensional mold and the second three-dimensional mold are adapted to form the first three-dimensional features and the second three-dimensional features, such that the first three-dimensional features and the second three-dimensional features substantially complement each other. The first three-dimensional features and the second three-dimensional features may be formed in any desired shape and size. For example, the first three-dimensional features and the second three-dimensional features may be made polygonal or curved in shape.

In accordance with an embodiment of the present invention, engaging unit 506 includes a first aligning unit that is adapted to align the first substrate and the second substrate, such that the first three-dimensional features and the second three-dimensional features are substantially engaged in an alternating manner. The first aligning unit may, for example, be implemented as a pick-and-place unit that picks the first substrate, and aligns the first substrate with the second substrate.

In accordance with another embodiment of the present invention, first molding unit 502 includes a first thread mold adapted to form one or more first threads on a first extension at the first periphery, and second molding unit 504 includes a second thread mold adapted to form one or more second threads on a second extension at the second periphery. The first thread mold and the second thread mold are adapted to form the first threads and the second threads, such that the first threads and the second threads substantially complement each other. The first threads and the second threads may be formed in any desired manner. For example, the first threads and the second threads may be made on L-shaped extensions on the first substrate and the second substrate, as shown in FIGs. 4A and 4B.

In accordance with another embodiment of the present invention, engaging unit 506 includes a second aligning unit and a rotating unit. The second aligning unit is adapted to align the first substrate and the second substrate, while the rotating unit is adapted to rotate the first substrate and the second substrate relative to each other, such that the first threads and the second threads close together. The second aligning unit may, for example, be implemented as a pick-and-place unit that picks the first substrate, and aligns the first substrate with the second substrate. The rotating unit may, for example, be a unit that holds the first substrate and the second substrate, and rotates them relative to each other, to form the enclosure. In addition, the rotating unit may be integrated into the pick-and-place unit, wherein the pick-and-place unit may be programmed to rotate the first substrate relative to the second substrate after aligning the first substrate with the second substrate.

It should be noted that the first substrate and the second substrate may be made from the same manufacturing material or different manufacturing materials, depending on their desired characteristics, such as transparency, strength and flexibility. Examples of manufacturing materials include, but are not limited to, plastics, polypropylene, polystyrene, polycarbonates, and other polymers.

FIG. 5 is merely an example, which should not unduly limit the scope of the claims herein. One of ordinary skill in the art would recognize many variations, alternatives, and modifications of embodiments of the present invention.

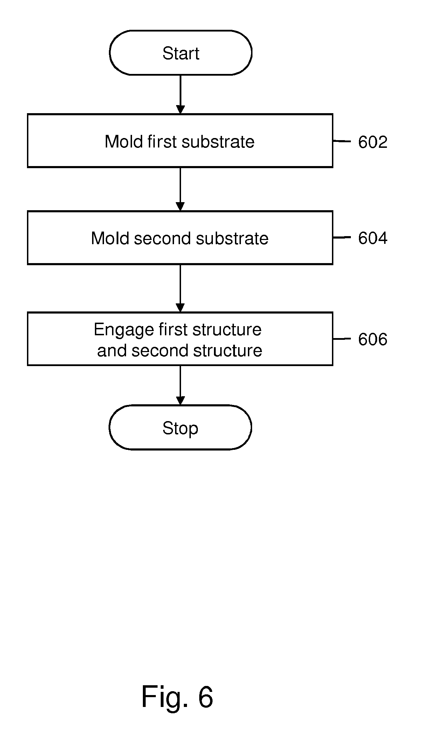

FIG. 6 illustrates a method of manufacturing an article involving encapsulation of one or more hygroscopic materials, in accordance with an embodiment of the present invention. The method is illustrated as a collection of steps in a logical flow diagram, which represents a sequence of steps that can be implemented in hardware, software, or a combination thereof.

At step 602, a first substrate is molded. One or more first structures are formed at a first periphery associated with the first substrate.

At step 604, a second substrate is molded. One or more second structures are formed at a second periphery associated with the second substrate. The second substrate is formed in a manner that it substantially complements the first substrate.

At step 606, the first structures and the second structures are engaged together mechanically to form an enclosure between the first substrate and the second substrate. As mentioned above, the first substrate and the second substrate are formed in a manner that they substantially complement each other. Consequently, the enclosure so formed is capable of preventing exposure of a hygroscopic material encapsulated between the first substrate and the second substrate to the surrounding environment.

In accordance with an embodiment of the present invention, step 602 includes forming a plurality of first three-dimensional features protruding out from the first substrate along the first periphery in a sequence, and step 604 includes forming a plurality of second three-dimensional features protruding out from the second substrate along the second periphery in a sequence. Step 602 may, for example, be performed by an injection molding machine that includes a first three-dimensional mold designed to form the first three-dimensional features on the first substrate. Step 604 may, for example, be performed by an injection molding machine that includes a second three-dimensional mold designed to form the second three-dimensional features on the second substrate.

In accordance with an embodiment of the present invention, step 606 includes aligning the first substrate and the second substrate, such that the first three-dimensional features and the second three-dimensional features are substantially engaged in an alternating manner. Step 606 may, for example, be performed by a pick-and-place unit that picks the first substrate, and aligns the first substrate with the second substrate.

In accordance with another embodiment of the present invention, step 602 includes forming one or more first threads on a first extension at the first periphery of the first substrate, and step 604 includes forming one or more second threads on a second extension at the second periphery of the second substrate. Step 602 may, for example, be performed by an injection molding machine that includes a first thread mold designed to form the first threads on the first substrate. Step 604 may, for example, be performed by an injection molding machine that includes a second thread mold designed to form the second threads on the second su bstrate.

In accordance with another embodiment of the present invention, step 606 includes aligning the first substrate and the second substrate, and rotating the first substrate and the second substrate relative to each other, such that the first threads and the second threads close together. Step 606 may, for example, be performed by a pick-and-place unit that picks the first substrate, and aligns the first substrate with the second substrate, and a rotating unit that holds the first substrate and the second substrate, and rotates them relative to each other.

It should be noted that the first substrate and the second substrate may be made from the same manufacturing material or different manufacturing materials, depending on their desired characteristics, such as transparency, strength and flexibility. Examples of manufacturing materials include, but are not limited to, plastics, polypropylene, polystyrene, polycarbonates, and other polymers.

It should be noted here that steps 602-606 are only illustrative and other alternatives can also be provided where steps are added, one or more steps are removed, or one or more steps are provided in a different sequence without departing from the scope of the claims herein. For example, step 602 and step 604 may be performed simultaneously.

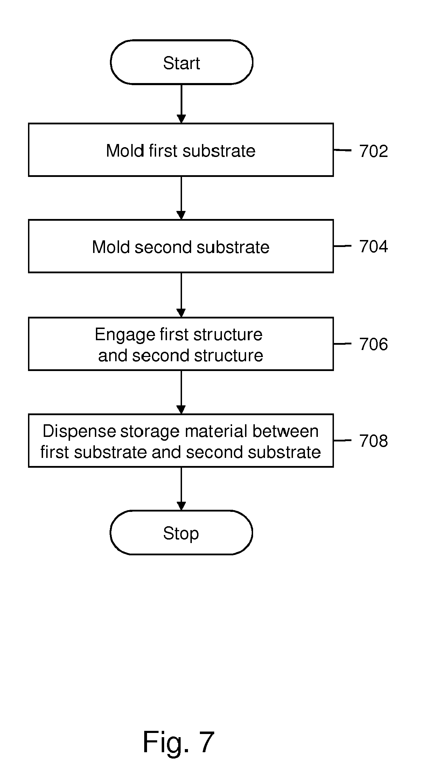

FIG. 7 illustrates a method of manufacturing a storage medium, in accordance with an embodiment of the present invention. The method is illustrated as a collection of steps in a logical flow diagram, which represents a sequence of steps that can be implemented in hardware, software, or a combination thereof.

At step 702, a first substrate is molded. The storage medium may, for example, be a holographic storage medium that is circular in shape and has a central punch area. In such a case, a circular first substrate with a central punch area is molded. The first substrate so molded includes a first inner periphery and a first outer periphery. One or more first structures are formed at the first outer periphery, in accordance with step 702. Step 702 may, for example, be performed in a manner similar to step 602.

At step 704, a second substrate is molded. The second substrate is formed in a manner that it substantially complements the first substrate. Therefore, the second substrate also includes a second inner periphery and a second outer periphery. One or more second structures are formed at the second outer periphery, in accordance with step 704. Step 704 may, for example, be performed in a manner similar to step 604.

In accordance with a specific embodiment of the present invention, a step of attaching a first seal to the first inner periphery of the first substrate is performed. The first seal includes a first hole.

In accordance with a specific embodiment of the present invention, a step of attaching a hub the second inner periphery of the second substrate is performed. The hub may, for example, be in the form of a metal disc. This facilitates fitting of a rotating chuck of an optical drive into the hub, and helps in holding the storage medium.

At step 706, the first structures and the second structures are engaged together mechanically to form an enclosure between the first substrate and the second substrate. Step 706 may, for example, be performed in a manner similar to step 606.

At step 708, a storage material is dispensed between the first substrate and the second substrate. The storage material includes a hygroscopic material. For example, the storage material may be an active material in a fluid state. The active material fills the space between the first substrate and the second substrate. The active material then cures itself and bonds the first substrate and the second substrate together.

In accordance with a specific embodiment of the present invention, the storage material is dispensed through the first hole on the first seal. In accordance with a specific embodiment of the present invention, a step of closing the first hole with a second seal is performed, after step 708. The second seal may, for example, be a hermetic seal.

The enclosure, formed by the first structures and the second structures, prevents exposure of the storage material to the surrounding environment.

The storage medium so formed may also be packed in a cartridge assembly in order to protect the storage medium from external factors, such as heat, moisture and radiation.

It should be noted here that steps 702-708 are only illustrative and other alternatives can also be provided where steps are added, one or more steps are removed, or one or more steps are provided in a different sequence without departing from the scope of the claims herein. For example, step 702 and step 704 may be performed simultaneously.

Embodiments of the present invention provide an article involving encapsulation of one or more hygroscopic materials. A first substrate and a second substrate with first structures and second structures, respectively, are molded. The first structures and the second structures are then engaged together mechanically to form an enclosure between the first substrate and the second substrate.

The first structures and the second structures are simple in form, and can be engaged together to form the enclosure in a simple manner. Therefore, the article can be manufactured with higher yield in lesser time, compared to conventional articles.

In addition, the enclosure so formed is reliable, and therefore, is capable of preventing exposure of a hygroscopic material encapsulated between the first substrate and the second substrate to the surrounding environment.

Further, no additional material is required to be applied to form the enclosure. Therefore, the article has a reduced dead weight, and has a low cost, compared to conventional articles.

Moreover, an additional side wrap may be applied on the article, if required.

Furthermore, the article is suitable for various applications, including, but not limited to, holographic storage media, organic photovoltaic cells, and organic lighting devices.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. An article (102) of manufacture involving encapsulation of one or more hygroscopic materials, said article comprising:
a first substrate (106);
a second substrate (108);
one or more first structures at a first periphery, said first periphery being associated with said first substrate (106); and
one or more second structures at a second periphery, said second periphery being associated with said second substrate (108),
wherein said first structures and said second structures substantially complement each other, said first structures and said second structures are capable of being engaged together mechanically to form an enclosure (104) between said first substrate (106) and said second substrate (108), said enclosure (104) being capable of preventing exposure of a hygroscopic material encapsulated between said first substrate (106) and said second substrate (108) to surrounding environment.

2. The article of claim 1, wherein said first structures comprise a plurality of first three-dimensional features (204) protruding out from said first substrate (202), along said first periphery in a sequence, said second structures comprise a plurality of second three-dimensional features (208) protruding out from said second substrate (206), along said second periphery in a sequence, and said first substrate (202) is aligned with said second substrate (206), such that said first three-dimensional features (204) and said second three-dimensional features (208) are substantially engaged in an alternating manner.

3. The article of claim 1, wherein said first structures comprise one or more first threads (404) on a first extension at said first periphery, said second structures comprise one or more second threads (408) on a second extension at said second periphery, said first substrate (402) is aligned with said second substrate (406), and said first substrate (402) and said second substrate (406) are rotated relative to each other, such that said first threads (404) and said second threads (408) close together.

4. The article of claim 1 further comprising a storage material dispensed between said first substrate (106) and said second substrate (108), said storage material comprising a hygroscopic material, said enclosure (104) preventing exposure of said hygroscopic material to surrounding environment.

5. The article of claim 1 is a holographic storage medium.

6. The article of claim 1 further comprising one or more photovoltaic elements placed between said first substrate (106) and said second substrate (108), said photovoltaic elements comprising a hygroscopic material, said enclosure (104) preventing exposure of said hygroscopic material to surrounding environment.

7. The article of claim 1 further comprising one or more light-emitting elements placed between said first substrate (106) and said second substrate (108), said light-emitting elements comprising a hygroscopic material, said enclosure (104) preventing exposure of said hygroscopic material to surrounding environment.

8. A method of manufacturing an article (102) involving encapsulation of one or more hygroscopic materials, the method comprising:
molding a first substrate (106), wherein one or more first structures are formed at a first periphery associated with said first substrate (106);
molding a second substrate (108), wherein one or more second structures are formed at a second periphery associated with said second substrate (108), said second structures substantially complementing said first structures; and
engaging said first structures and said second structures together mechanically to form an enclosure (104) between said first substrate (106) and said second substrate (108), said enclosure (104) being capable of preventing exposure of a hygroscopic material encapsulated between said first substrate (106) and said second substrate (108) to surrounding environment.

9. The method of claim 8, wherein said molding said first substrate (202) comprises forming a plurality of first three-dimensional features (204) in a sequence, said first three-dimensional features (204) protruding out from said first substrate (202) along said first periphery, said molding said second substrate (206) comprises forming a plurality of second three-dimensional features (208) in a sequence, said second three-dimensional features (208) protruding out from said second substrate (206) along said second periphery, and said engaging comprises aligning said first substrate (202) and said second substrate (206), such that said first three-dimensional features (204) and said second three-dimensional features (208) are substantially engaged in an alternating manner.

10. The method of claim 8, wherein said molding said first substrate (402) comprises forming one or more first threads (404) on a first extension at said first periphery, said molding said second substrate (406) comprises forming one or more second threads (408) on a second extension at said second periphery, and said engaging comprises:
aligning said first substrate (402) and said second substrate (406); and
rotating said first substrate (402) and said second substrate (406) relative to each other, such that said first threads (404) and said second threads (408) close together.

11. The method of claim 8 further comprising dispensing a storage material between said first substrate (106) and said second substrate (108), said storage material comprising a hygroscopic material, wherein said enclosure (104) prevents exposure of said hygroscopic material to surrounding environment.

12. The method of claim 11 further comprising:
attaching a first seal to a first inner periphery associated with said first substrate (106), said first seal comprising a first hole; and
attaching a hub to a second inner periphery associated with said second substrate (108).

13. The method of claim 12, wherein said storage material is dispensed between said first substrate (106) and said second substrate (108) through said first hole.

14. The method of claim 8 further comprising placing one or more photovoltaic elements between said first substrate (106) and said second substrate (108), wherein said photovoltaic elements comprise a hygroscopic material, said enclosure (104) preventing exposure of said hygroscopic material to surrounding environment.

15. The method of claim 8 further comprising placing one or more light-emitting elements between said first substrate (106) and said second substrate (108), wherein said light-emitting elements comprise a hygroscopic material, said enclosure (104) preventing exposure of said hygroscopic material to surrounding environment.
